# EUROPEAN PATENT APPLICATION

(11) **EP 3 575 461 A2**
(43) Date of publication of application: **04.12.2019**
(21) Application number: 19175053.8
(22) Date of filing: 17.05.2019
(51) Int. Cl.: D04B 1/12, D04B 1/18

(54) **PLATED KNIT FABRIC WITH FLEECE YARN**

(30) Priority: 18.05.2018 TW 107117043
(71) Applicant: Issetex Co., Ltd, Shengang Township, Cjhamghua County 50952 (TW)
(72) Inventor: Tseng, Huan-Chih, 50952 SHENGANG TOWNSHIP, CHANGHUA COUNTY (TW)
(74) Representative: Lang, Christian

(57) **Abstract**

The present invention provides a stacked fabric, in which a cellulose filament is used as a ground yarn, a yarn made of a hydrophobic fiber is used as a face yarn, and the face yarn and the ground yarn are knitted by a stacking yarn. During the knitting by stacking, the feeding tension of the ground yarn is 1.5 to 3 times the feeding tension of the face yarn, the feeding vertical angle of the ground yarn is from 15 to 30 degrees, and a sandwiching yarn comprising an elastic fiber is sandwiched in a knitted course.

**[REPRESENTATIVE DRAWING] FIG. 2**

**[SYMBOL DESCRIPTION OF REPRESENTATIVE DRAWING]**

sandwiched fabric (10)
course (11)
crown (111)
face yarn (20)
ground yarn (30)
sandwiching yarns (40)

## Description

### [FIELD OF THE INVENTION]

The present invention relates to weaving techniques, and more particularly to a stacked and sandwiched fabric.

### [DESCRIPTION OF THE RELATED ART]

Cool feeling clothes can reduce the irritable feverish sensation upon wearing. However, hydrophobic materials are largely used as a main component of the fiber, so static charges tend to build up after wearing, causing discomfort during the wearing. Therefore, the technology is still not sophisticated, and needs to be improved.

### [SUMMARY OF THE INVENTION]

Therefore, a main object of the present invention is to provide a stacked and sandwiched fabric, in which a cellulose filament is used as a ground yarn to increase the affinity of the fabric to the human skin. In addition to avoiding the buildup of static charges, the cellulose filament having hydrophilicity can achieve better sweat absorption to improve the comfort in wearing.

Accordingly, to achieve the above object, the present invention provides a stacked and sandwiched fabric, in which a cellulose filament is used as a ground yarn, a yarn made of a hydrophobic fiber is used as a face yarn, and the face yarn and the ground yarn are knitted by stacking. During the knitting by stacking, the feeding tension of the ground yarn is 1.5 to 3 times the feeding tension of the face yarn, the feeding vertical angle of the ground yarn is from 15 to 30 degrees, and a sandwiching yarn is sandwiched in a knitted course.

Specifically, during the knitting, the feeding tensions of the ground yarn and the face yarn are different, and the feeding tension of the ground yarn is greater than and may be 1.5 to 3 times the feeding tension of the face yarn. The specific value may be between 2.5 grams and 4.0 grams for the feeding tension of the ground yarn, and may be 1.5 g for the feeding tension of the face yarn.

The sandwiching yarn is a yarn made of elastic fibers, hydrophobic fibers, plant fibers or functional fibers.

The sandwiching yarn is intertwined on a crown of the course.

The sandwiching yarn is periodically intertwined on the course by yarn over.

The yarn-over positions of the sandwiching yarn on two adjacent courses are made to locate at different radial positions by single needle and double needle stitching upon knitting.

In addition, the count ratio of the ground yarn to the face yarn is between 0.4:1 and 1.1:1.

The stacked and sandwiched fabric produced with the above method and material has an instantaneous maximum heat flux (Q-max) of between 0.110 and 0.140.

### [BRIEF DESCRIPTION OF THE DRAWINGS]

FIG. 1 is a partial front view of a preferred embodiment of the invention.
FIG. 2 is a partial rear view of a preferred embodiment of the invention.
FIG. 3 is a partial photomicrograph of a preferred embodiment of the present invention, showing the state of the front side.
FIG. 4 is a partial photomicrograph of a preferred embodiment of the present invention, showing the state of the rear side.
FIG. 5 is a partial rear view of another preferred embodiment of the invention.
FIG. 6 is a partial photomicrograph of another preferred embodiment of the present invention, showing the state of the front side.
FIG. 7 is a partial photomicrograph of another preferred embodiment of the present invention, showing the state of the rear side.

### [DETAILED DESCRIPTION OF THE PREFERRED EMBODIMENTS]

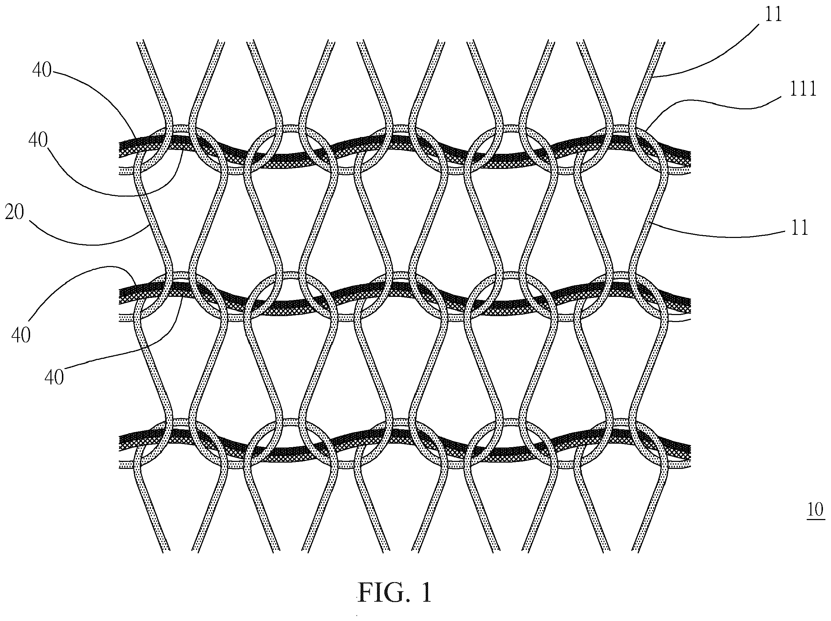

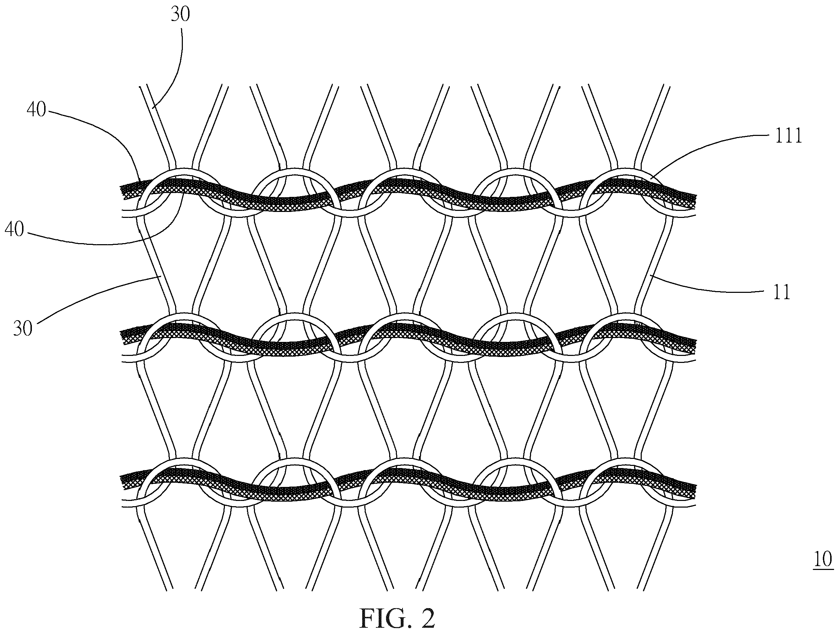

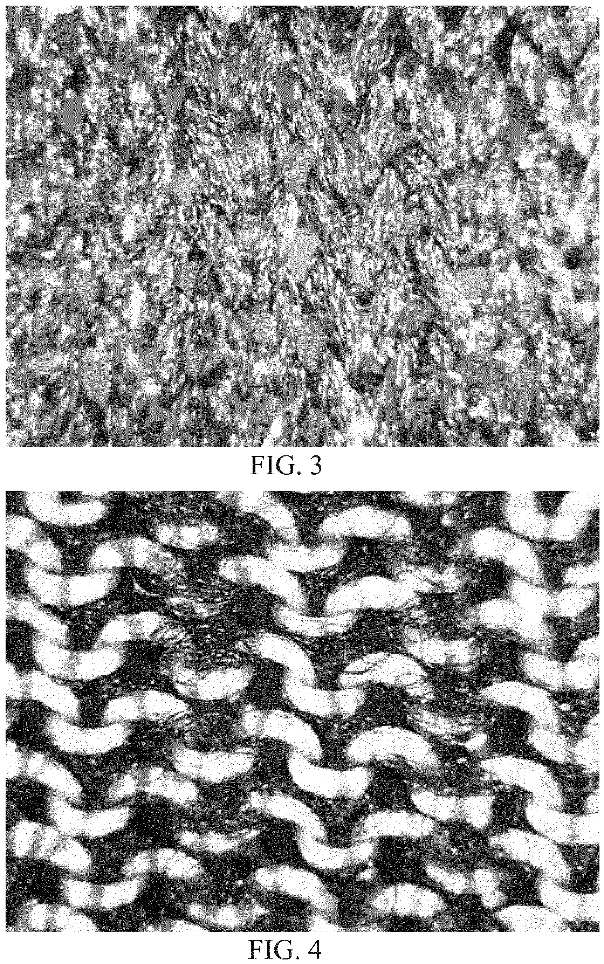

First, referring to FIGs 1 to 4, a stacked and sandwiched fabric (10) provided in a preferred embodiment of the present invention is a one-side stacked structure, which is knitted with a face yarn (20) and a ground yarn (30) by stacking, in which two sandwiching yarns (40) are sandwiched during the knitting by stacking.

The face yarn (20) is a yarn made of hydrophobic fibers, and materials of such hydrophobic fibers are known in the art, such as polypropylene fiber, polyethylene terephthalate fiber or nylon fiber. However, the materials used in the present invention are not limited thereto.

The ground yarn (30) is a yarn made of a hydrophilic cellulose filament, and the cellulose filament material known in the prior art includes, for example, cotton, hemp or rayon. However, in the present invention, the materials used for the ground yarn are not limited to the above.

The ratio of the thickness of the ground yarn (30) to the face yarn (20) is preferably at a count ratio of the ground yarn to face yarn of 0.4:1 to 1.1:1.

One of the two sandwiching yarns (40) is a yarn made of elastic fibers, and the other is a yarn made of hydrophobic fibers, plant fibers or other functional fibers. These sandwiching yarns can be used to adjust the elasticity of the fabric itself.

It is to be particularly noted that when the face yarn (20) and the ground yarn (30) are knitted by stacking, the feeding tension of the face yarn is 1.5 grams, and the feeding tension of the ground yarn is between 2.5 to 4.0 grams; and the feeding vertical angle of the ground yarn is between 15 to 30 degrees. During the knitting, the sandwiching yarns (40) are sandwiched in a knitted course (11), by intertwining the sandwiching yarns (40) on a crown (111) of the course (11).

In the one-side stacked and sandwiched fabric (10) produced by above-mentioned yarns and knitting method, the ground yarn (30) is allowed to locate at the inner face of the fabric, to avoid the buildup of static charges and provide better moisture absorption when it comes into contact with human skin, thereby improving the comfort in wearing; the face yarn (20) located at the outer face can quickly remove the water; and the sandwiching yarns (40) intertwined on the course (11) can further improve the stereoscopic effect of the stacked and sandwiched fabric (10), and increase the gap between the stacked and sandwiched fabric (10) and human skin, to achieve good ventilation of air. Therefore, the stacked and sandwiched fabric (10) is allowed to have a maximum instantaneous heat flux (Q-max) of between 0.110 and 0.1600, thus achieving a cool and comfortable wearing feeling to effectively overcome the defects of conventional technologies. In this embodiment, the fabric of the present invention has a Q-max of 0.157 W/cm2, as measured under the Specified Requirements for Cool Feeling Textiles (FTTS-FA-019-3.0 version-4) by THERMO LABO II B' TYPE:KES-F7 at a cold plate temperature of 25 ± 0.1°C and a hot plate temperature of 35 ± 0.1°C, in a test environment at a temperature of 20 ± 2°C and a humidity of 65 ± 2%.

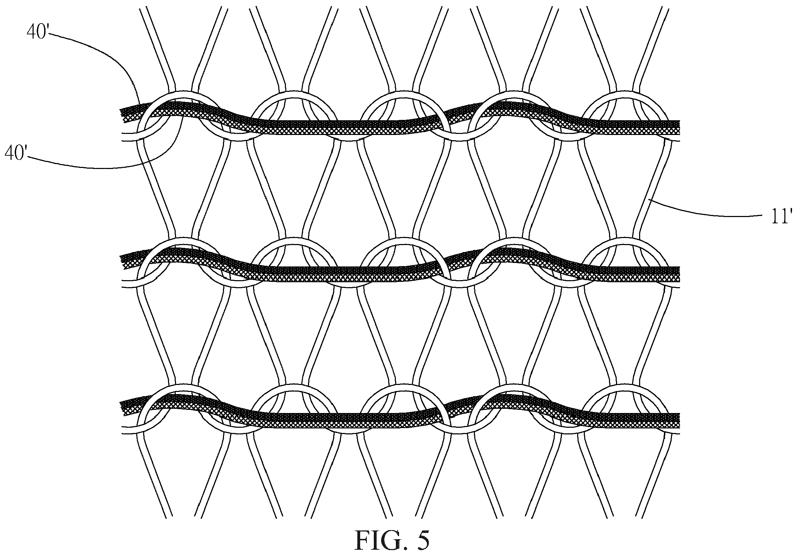

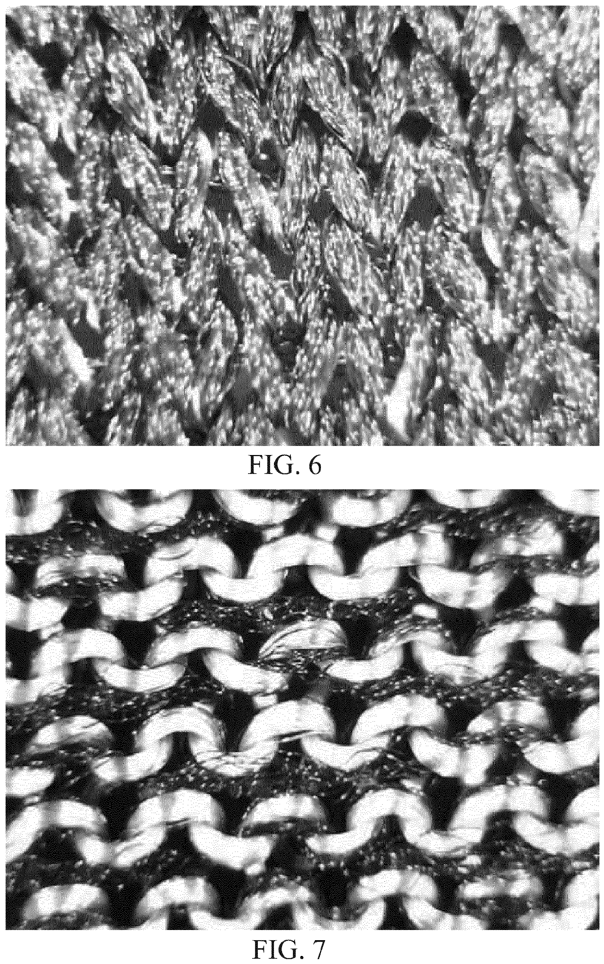

Moreover, to change the stereoscopic state of the stacked and sandwiched fabric, as disclosed in another preferred embodiment of the present invention shown in FIGs 5 to 7, an elastic yarn (40') is periodically intertwined on a course (11') by yarn over during the knitting by stacking, and the yarn-over positions of the sandwiching yarn (40') are made to locate at different radial positions, when sandwiched in two adjacent courses. In order to achieve such a structure, the sandwiching yarns (40') are sandwiched respectively by single needle and double needle stitching upon knitting the adjacent courses. The yarn-over method is conventional, and is not elaborated here in the present invention.

However, it should be noted that by changing the yarn-over position of the sandwiching yarns (40'), the stereoscopic state of the stacked and sandwiched fabric is changed to obtain different stereoscopic effects. Compared with the embodiment disclosed above, the same effect is achieved, which contributes to the improvement of comfort in wearing after the stacked and sandwiched fabric is formed into a garment.

### [SYMBOL DESCRIPTION]

sandwiched fabric (10)
course (11)(11')
crown (111)
face yarn (20)
ground yarn (30)
sandwiching yarns (40)(40')

## Claims

1. A stacked and sandwiched fabric, comprising:
a face yarn, which is a yarn made of a hydrophobic fiber;
a ground yarn, which is a yarn made of a cellulose filament; and
a sandwiching yarn, which is a yarn made of an elastic fiber, hydrophobic fiber, plant fiber or functional fiber,
wherein the face yarn and the ground yarn are knitted by stacking, and during the knitting, the feeding tension of the ground yarn is 1.5 to 3 times the feeding tension of the face yarn, the feeding vertical angle of the ground yarn is from 15 to 30 degrees, and the sandwiching yarn is sandwiched in a knitted course.

2. The stacked and sandwiched fabric according to claim 1, wherein the count ratio of the ground yarn to the face yarn is between 0.4:1 and 1.1:1.

3. The stacked and sandwiched fabric according to claim 1, wherein during the knitting, the feeding tension of the ground yarn is from 2.5 to 4.0 grams.

4. The stacked and sandwiched fabric according to claim 1 or 3, wherein during the knitting, the feeding tension of the face yarn is 1.5 grams.

5. The stacked and sandwiched fabric according to claim 1, wherein the sandwiching yarn is intertwined on a crown of the course.

6. The stacked and sandwiched fabric according to claim 1, wherein the sandwiching yarn is intertwined on the course at intervals by yarn over.

7. The stacked and sandwiched fabric according to claim 6, wherein the yarn-over positions of the sandwiching yarn on two adjacent courses are made to locate at different radial positions by single needle and double needle stitching upon knitting.

8. The stacked and sandwiched fabric according to claim 1, wherein the hydrophobic fiber from which the face yarn is made is a polypropylene fiber, a polyethylene terephthalate fiber or a nylon fiber.

9. The stacked and sandwiched fabric according to claim 1, wherein the cellulose filament from which the ground yarn is made is a cotton fiber, a hemp fiber or a rayon fiber.

10. The stacked and sandwiched fabric according to claim 1, having an instantaneous maximum heat flux (Q-max) of between 0.110 and 0.140.
